# EUROPEAN PATENT APPLICATION

(11) **EP 1 741 404 A1**
(43) Date of publication of application: **10.01.2007**
(21) Application number: 05257605.5
(22) Date of filing: 12.12.2005
(51) Int. Cl.: A61C 3/00, A61C 5/06

(54) **Dental instrument with movable tip portion**

(30) Priority: 07.07.2005 US 176027
(71) Applicant: Kerrhawe SA, 6934 Bioggio (CH)
(72) Inventor: Kilcher, Beat, 6935 Bosco Luganese (CH); Da Rold, Marco, 6951 Odogno (CH); Croce, Paolo, 6516 Cugnasco (CH)
(74) Representative: Findlay, Alice Rosemary

(57) **Abstract**

The present invention relates to a handheld dental instrument having a movable tip portion including one end rotatably secured to a distal end of a handle portion and an opposing end defining a tip including a tip member adapted for intra oral use whereby the tip can be rotated and fixedly positioned at various locations about an axis. The tip member and/or tip portion optionally may be removable.

## Description

The present invention relates to a dental instrument and, more specifically, to a handheld dental instrument including a handle portion cooperating with a movable tip portion provided with one of a variety of tip members adapted for intra oral use.

A number of dental instruments or devices, e.g. tooth brushes, are known to incorporate movable tip portions into a handle portion with the tip portion having a tip member, such as a gum stimulator or cleansing means, adapted for intra oral use. The tip portion may cooperate with the handle portion such as via a ball and socket type joint to permit movement of the tip member. However, these connections generally fail to provide for stable orientation of the tip portion. Some of the current dental instruments further include multiple and expensive materials and/or components and require extra manufacturing steps, thereby increasing costs.

In addition, the use of these instruments in clinical applications may be impractical, overly involved, or fail to satisfy the demands of use. For example, the instrument may fail to provide a tip portion with the required mobility and/or stability to be useful when accessing difficult to reach distal and undercut areas in the mouth during dental procedures. Finally, current dental instruments may not allow for tip portion or tip member interchangeability or replacement such as when a brand new tip portion or member or a tip member adapted to perform a different function is desired.

Accordingly, it would be desirable to provide an improved dental instrument with movable tip portion that addresses these and other deficiencies.

In one embodiment of the present invention, a dental instrument includes a handle portion having a distal end including an aperture extending therethrough and a stop situated substantially proximate the aperture. The dental instrument further includes a tip portion having one end defining a gear provided with teeth for cooperating with the stop and an opposing end defining a tip including a tip member adapted for intra oral use. The gear further includes a flange extending away therefrom. A notched section defined by a gap in the flange permits insertion within and removal from the aperture.

To connect the tip portion to the handle portion, pressure is applied on a distal end of the flange so that the gap is minimized, thereby permitting the flange to be inserted through the aperture. After insertion, the flange is rotatably secured within the aperture so that the tip rotates about an axis and the teeth cooperate with the stop to fixedly position the tip at various locations about the axis. Removal of the tip portion is accomplished by applying pressure on the distal end of the flange so that the gap is again minimized, thereby permitting one to remove the flange from the aperture. In a variation of this embodiment, the distal end of the handle portion includes the flange extending away therefrom, and the gear of the tip portion includes the aperture for removably and securely receiving the flange so that the tip rotates about an axis and the teeth cooperate with the stop to fixedly position the tip at various locations about the axis.

In another embodiment, a dental instrument includes a handle portion having a distal end including an aperture extending therethrough and a plurality of first stop members, e.g., cavities, disposed about the aperture. The dental instrument further includes a tip portion having one end defining a boss portion including a radial protrusion extending away therefrom with at least one second stop member, e.g., a detent, thereon for cooperating with the first stop members. The tip portion also included an opposing end defining a tip including a tip member adapted for intra oral use. The tip portion is overmolded onto the distal end of the handle portion such that, upon curing, the boss portion is non-removably and rotatably secured within the aperture. Accordingly, the tip can rotate about an axis and the at least one detent cooperates with the cavities to fixedly position the tip at various locations thereabout.

The handle portion and tip portion for each embodiment may be molded using techniques known in the art, e.g. injection molding, and can be molded without the need for sliders in a mold assembly. The handle and tip portion may be composed of polymeric material, e.g. a chemical resistant and low cost polymeric material such as polypropylene, and optionally can be colored.

The tip member may include, for example, a spongy, porous plastic, adhesive, or paper material and is adapted to perform at least one of a variety of different functions such as application and/or removal of material(s) during intra-oral use. The tip member also may be removably placed on the tip and retained thereon, such as by friction fit, or may be adhesively secured thereon.

At least through the preferred embodiments, there is provided an improved dental instrument with movable tip portion and tip member adapted for intra oral use that includes the mobility and stability needed, for example, to access difficult to reach areas in the mouth during dental procedures and that reduces the number of parts and labor and costly materials required for assembly thereof, thereby reducing overall costs.

Further features and objectives of the present invention will become more readily apparent from the following detailed description.

The invention will now be described by way of example with reference to the accompanying drawings in which:

FIG. 1 is a front perspective view of an embodiment of the dental instrument of the present invention;

FIG. 1A is an elevational view of the distal end of the handle portion and tip portion of Fig. 1;

FIG. 2 is an exploded rear perspective view of the distal end of the handle portion and tip portion of Fig. 1;

FIG. 3 is an exploded front perspective view of an alternate embodiment of the distal end of the handle portion and tip portion in accordance with the present invention;

FIG. 3A is an enlarged elevational view of Fig. 3;

FIG. 4 is an exploded front perspective view of an alternate embodiment of the distal end of the handle portion and tip portion in accordance with the present invention;

FIG. 5 is a front perspective view of another embodiment of the dental instrument of the present invention;

FIG. 6 is a cross-sectional view of FIG. 5 taken along line 6-6;

FIG. 7 is an exploded perspective view of the distal end of the handle portion and tip portion of Fig. 5; and

FIG. 8 is an exploded rear perspective view of the distal end of the handle portion and tip portion of Fig. 5.

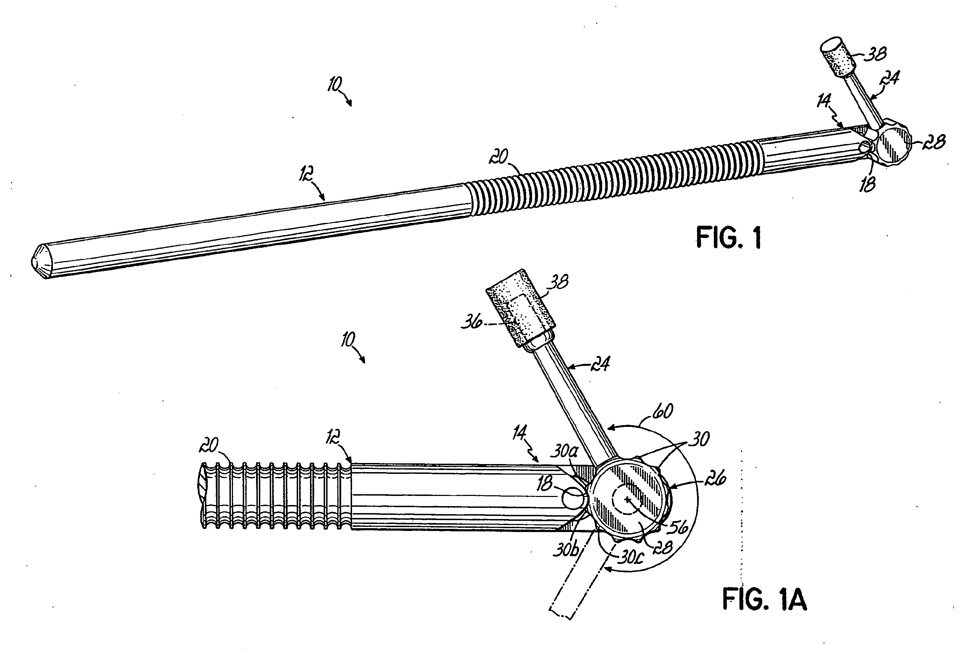

With reference to FIGS. 1-2, a single or multi-use dental instrument 10 in accordance with the present invention includes a handle portion 12 having a distal end 14 including an aperture 16 extending therethrough, which defines an axis 56, and an integrated stop 18 situated substantially proximate the aperture 16. The handle portion 12 includes an axial length and may further include gripping means 20 illustrated as a plurality of spaced apart ridges. Other gripping means 20 are contemplated including a rubber grip (not shown) and the like. In addition, the handle portion 12 may be ergonomically contoured for gripping.

The dental instrument 10 further includes a tip portion 24 having one end 26 defining a gear 28 provided with teeth 30 for cooperating with the stop 18 and an opposing end 34 defining a tip 36 including a tip member 38, e.g., a spongy tip member, adapted for intra oral use. The tip member 38 may be removably placed on the tip 36 and retained, such as by friction fit, or may be adhesively secured thereon. The gear 28 further includes a flange 42 extending perpendicularly away therefrom with a shoulder portion 44 extending substantially circumferentially about a distal end 46 thereof. A notched section 48 defined by a gap 50 extends substantially along the length of the flange 42. The notched section 48 permits the flange 42 to be inserted within and removed from the aperture 16 as described below.

The handle portion 12 and tip portion 24 may be molded using techniques known in the art, e.g., injection molding. It should be understood that the handle portion 12 and tip portion 24 may be molded without the need for sliders in a mold assembly. In addition, rather than being placed onto the tip portion 24 after the molding process, it should be further understood that the tip member 38 may be incorporated into the molding process for molding thereof onto the end 34 of the tip portion 24.

To connect the tip portion 24 to the handle portion 12, pressure is applied to the distal end 46 of the flange 42 so that the gap 50 is minimized, thereby permitting the flange 42 to be inserted into the aperture 16. Accordingly, the flange 42 is inserted into the aperture 16 so that the shoulder portion 44 exits the other side. Then, the pressure may be released which allows gap 50 to expand, thereby forcing the shoulder portion 44 into abutting relationship with a recessed area 54 of the distal end 14 of the handle portion 12 providing a secure fit for the tip portion 24. The flange 42, thus, is rotatably secured to the distal end 14 of the handle portion 12 so that the tip 36 and tip member 38 rotate about the axis 56, defined by aperture 16, and the teeth 30 cooperate with the stop 18 to fixedly position the tip 36 at various locations about the axis 56. Although the axis 56 is substantially perpendicular to the axial length of the handle portion 12, it should be understood that the dental instrument 10 may be modified so that the axis 56 is substantially parallel to the axial length of the handle portion 12.

The tip portion 24, as shown in FIG. 1A, is situated in a fixed position and, more specifically, the stop 18 is securely situated between adjacent teeth 30a and 30b. To move the tip 36 to another fixed position about the axis 56, e.g. to situate the stop 18 between adjacent teeth 30b and 30c, an adequate force or pressure can be applied to the tip 36, as indicated by arrow 60. In one embodiment of the present invention, the stop 18 may comprise an elastic material so as to reduce the force required to rotate the tip 36. With further reference to the particular embodiment depicted in FIGS. 1-2, the tip 36 may rotate up to about 300° about the axis 56 and be fixedly positioned in eleven different positions. However, it should be understood by one skilled in the art that the size of the gear 28 and number of teeth 30 may be increased or decreased and/or the distance between the teeth 30 and the size of the stop 18 may be adjusted to increase or decrease the number of fixed positions for the tip 36 and the degree of maximum rotation.

Removal of the tip portion 24 is accomplished by applying pressure on the distal end 46 of the flange 42 so that the gap 50 again is minimized, thereby permitting removal of the flange 42 from the aperture 16.

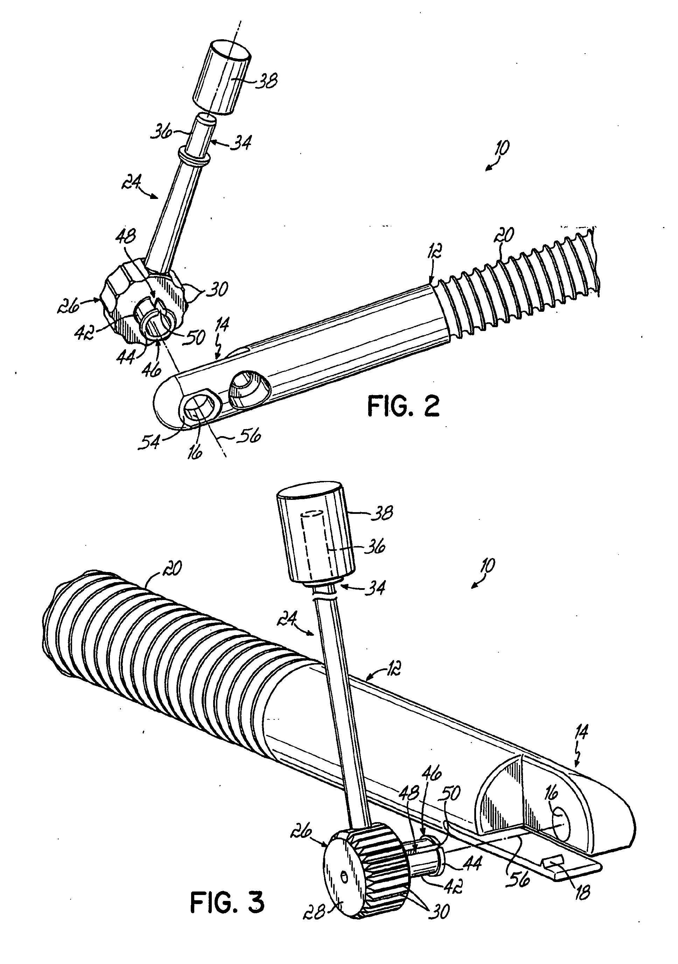

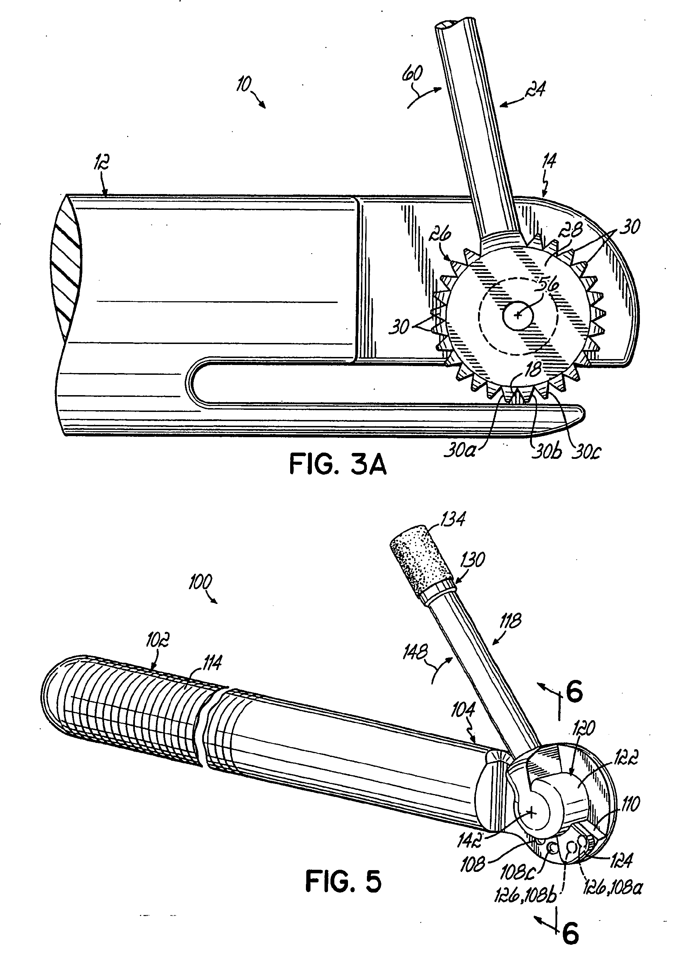

With further reference to FIGS. 3 and 3A, the distal end 14 of the handle portion 12 and integrated gear 28 of the tip portion 24 of FIGS. 1-2 have been modified. More specifically, the stop 18 has been integrated into the distal end 14 of the handle portion 12 to extend in a direction perpendicular thereto rather than substantially parallel therewith. In addition, the number of teeth 30 on the gear 28 has been increased while the space between adjacent teeth 30a and 30b and the size of the stop 18 has been decreased to allow for a greater number of fixed positions for the tip 36 about the axis 56. The tip 36 in FIGS. 3 and 3A is fixedly positionable up to about 180° about the axis 56.

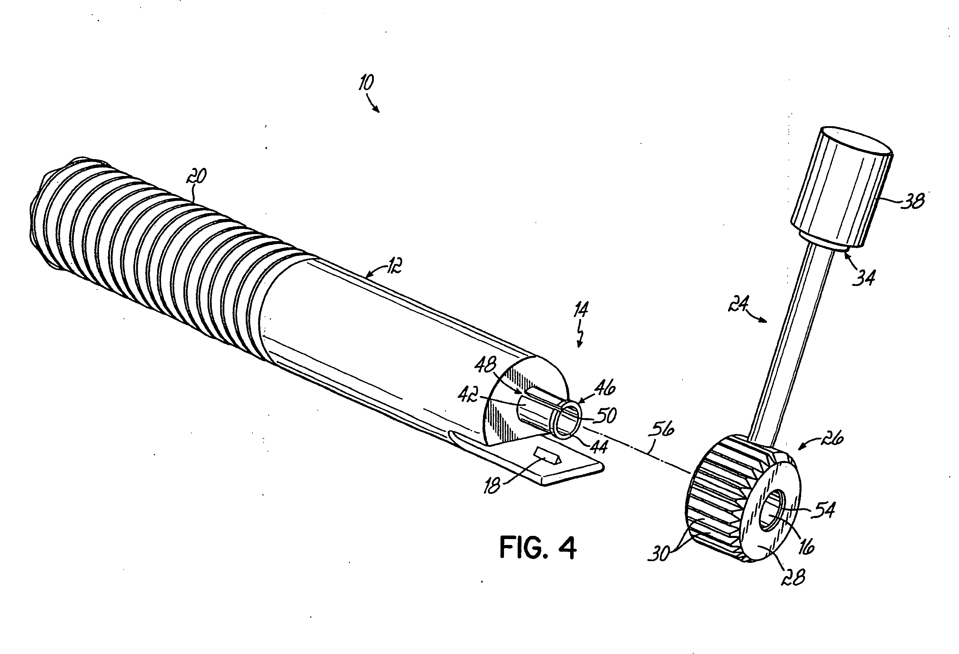

With further reference to FIG. 4, the distal end 14 of the handle portion 12 and integrated gear 28 of the tip portion 24 of FIGS. 1-2 again have been modified. More specifically, the distal end 14 of the handle portion 12 includes flange 42. In addition, the flange 42 now defines axis 56, which is substantially parallel with the axial length of the handle portion 12, and also extends away from the distal end 14 in a direction parallel with the axial length of the handle portion 12. However, it should be understood that the flange 42 may extend away therefrom in a direction substantially perpendicular to the axial length of the handle portion 12. Consequently, the integrated gear 28 of the tip portion 24 includes aperture 16 which removably and securely receives the flange 42, as described earlier, so that the tip 36 and tip member 38 rotate about the axis 56 and the teeth 30 cooperate with the stop 18 to fixedly position the tip 36 at various locations about the axis 56.

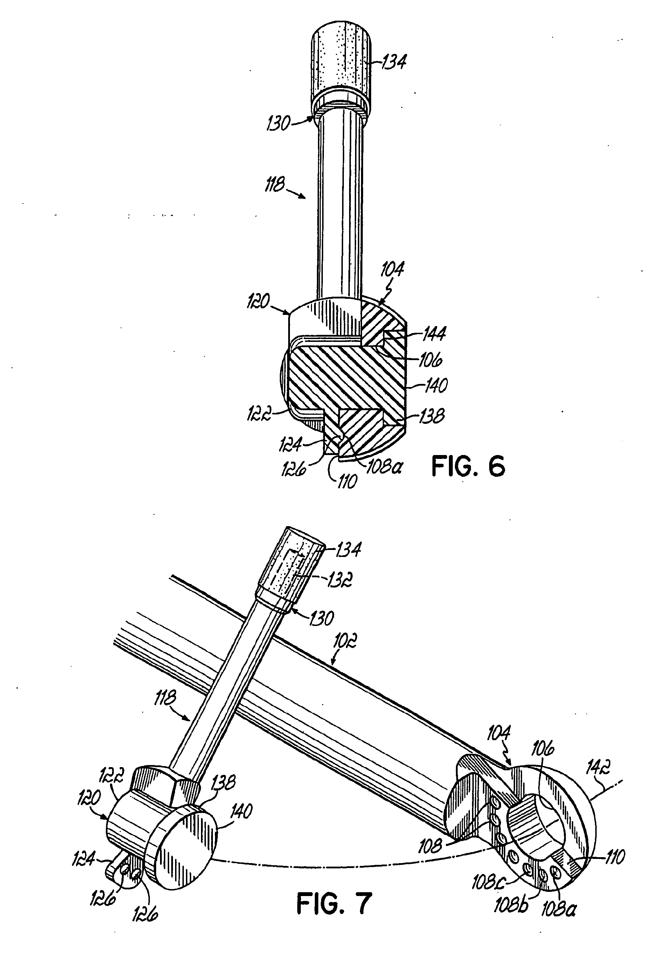

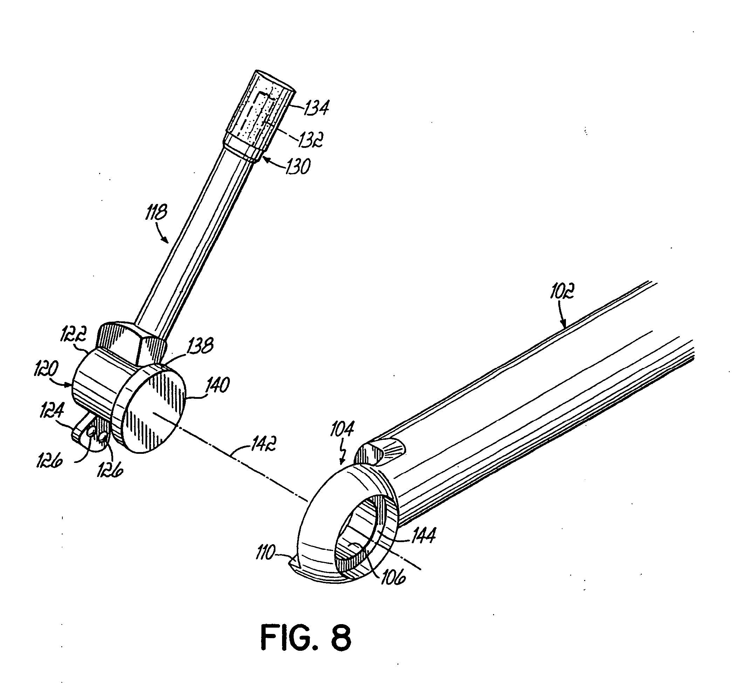

In another embodiment of the present invention, as shown in FIGS. 5-8, a dental instrument 100 includes a handle portion 102 having a distal end 104 including an aperture 106 extending therethrough, which defines an axis 142, and first stop members 108, e.g., cavities, disposed about the aperture 106 on a stepped portion 110. The handle portion 102 includes an axial length and may further include gripping means 114 illustrated as spaced apart ridges. Other gripping means 114 are contemplated including a rubber grip (not shown) and the like. In addition, the handle portion 102 may be ergonomically contoured for gripping.

The dental instrument 100 further includes a tip portion 118 having one end 120 defining a boss portion 122 and an opposing end 130 defining a tip 132. The boss portion 122includes a radial protrusion 124 extending away therefrom with second stop members 126, e.g., detents, thereon for cooperating with the cavities 108. It should be understood that one or more than two detents 126 may be provided on the protrusion 124 for cooperating with the cavities 108, as further discussed below. In addition, it should be further understood that the cavities 108 and detents 126 may be switched wherein the distal end 104 of the handle portion 102 is provided with detents 126 and the radial protrusion is provided with one or more cavities 108.

The boss portion 122 further includes a shoulder portion 138 extending substantially circumferentially about a distal end 140 thereof. The tip 132 includes a tip member 134, e.g., a spongy tip member, adapted for intra oral use. The tip member 134 may be removably placed on the tip 132 and retained thereon, such as by friction fit, or may be adhesively secured thereto. The boss portion 122, as further shown in FIGS. 5-8, is rotatably secured within the aperture 106 of the handle portion 102 so that the tip 132 and tip member 134 rotates about an axis 142, defined by aperture 106, and the detents 126 cooperate with the cavities 108 to fixedly position the tip 132 at various locations about the axis 142.

To provide the connection between the tip portion 118 and handle portion 102, including formation of the detents 126, the handle portion 102 first is molded by techniques known in the art, such as by injection molding. The tip portion 118 next is overmolded, as is known in the art, onto the distal end 104 of the handle portion 102. The boss portion 122, thus, is permitted to extend through the aperture 106 with the shoulder portion 138 being formed in abutting relationship with a recessed area 144 of the distal end 104 of the handle portion 102. In addition, the detents 126 are formed on the radial protrusion 124 within corresponding cavities 108a and 108b. After curing, the tip portion 118 is non-removably and rotatably secured within the aperture 106. It should be understood that the handle portion 102 and tip portion 118 may be injection molded without the need for sliders in a mold assembly. In addition, rather than being placed onto the tip portion 118 after the molding process, it should be understood that the tip member 134 may be incorporated into the molding process for molding thereof to the end 130 of the tip portion 118.

The tip portion 118, as shown in FIG. 5, is situated in a fixed position and, more specifically, the detents 126 are securely situated within corresponding cavities 108a, 108b. To move the tip 132 to another fixed position about the axis 142, e.g. to situate the detents 126 respectively within cavities 108b and 108c, an adequate force or pressure can be applied to the tip 132, as indicated by arrow 148. The radial protrusion 124 may include an elastic material such as to reduce the force required to rotate the tip 132. The tip 132 can rotate up to about 180° about the axis 142, before the boss portion 122 is impeded by the stepped portion 110, and can be fixedly positioned in six different positions with the detents 126 being situated in corresponding cavities 108. However, it should be understood by one skilled in the art that the number of cavities 108 may be increased or decreased and/or the spacing and size of the detents 126a, 126b and cavities 108 may be adjusted to increase or decrease the number of fixed positions for the tip 132 and the degree of maximum rotation. Although the axis 142 is shown as being substantially perpendicular to the axial length of the handle portion 102, it should be understood that the dental instrument 100 may be modified so that the axis 142 is substantially parallel to the axial length of the handle portion 102.

The handle portion 10, 102 and tip portion 24, 118, as shown in FIGS. 1-7, may include a polymeric material, such as a chemical resistant and low cost polymeric material, and optionally can be colored. The polymeric material may include, for example, polypropylene, polyethylene, high-density polyethylene, polyethylene/polystyrene blends, polycarbonate, polyphenylsulfone, polysulfone, polyamide, and/or polyether imide.

In addition to the spongy or open cell foam material generally disclosed above, the tip members 38, 134, alternatively, can include, for example, a porous plastic, adhesive, or paper material. Concerning spongy tip members 38, 134, the spongy material generally may include any open cell foamed material, for example, a foamed polyurethane (PUR) elastomer. The foamed PUR elastomer may include open micropores adapted for adsorption of water 300-400% with a volume expansion of 25%. The porous plastic material may include high-density polyethylene, polytetrafluoroethylene, ultra high molecular weight polyethylene, nylon 6, polypropylene, polyvinylidene fluoride, and/or polyethersulfone. The porous plastic material further may include an intricate network of open celled, omni-directional pores with average pore sizes down to 1 µm. The adhesive material may include a high viscous gel material while the paper material or paper tip member generally may include any paper point type member known in the art.

As indicated earlier, the tip members 38, 134 may be adapted for performance of a variety of functions including application and/or removal of desired material(s) during intra oral use. More specifically, spongy or porous plastic tip members may be utilized intra orally, such as for controlled topical wetting and absorption of liquids, topical cleaning of solutions, and controlled application of bonding liquids, fluoride solutions, bleaching solutions, haemostatic and astringent solutions, disinfection solutions, and the like. In addition, porous plastic tip members may be used for application of power bleaching liquids. Adhesive tip members may be utilized to pickup and/or place, for example, veneers, screws, inserts, brackets, posts, and other micro parts, and the like. Paper tip members, e.g., a paper point tip, may be used for absorption of liquids such as when drying or cleaning root canals.

The tip members 38, 134 may further include a cleaning lip (not shown) adapted or shaped, e.g., spoon or shovel-shaped, such as to remove excess cement, for example, from the proximal area or crown margin during intra oral use. The cleaning lip may be composed of material selected from silicones, thermoplastic elastomers, polyurethanes, and the like to provide for a desired level of flexibility. The hardness of the material may vary from 15 to 90 Shore A for the cleaning lip. The material also may be selected to provide enough radial friction with the end 34, 130 of the tip portion 24, 118 so as to avoid movement of the tip member 38, 134 during cement removal while allowing radial reorientation by a user.

In addition, the end 34, 130 of the tip portion 24, 118, for example, may be adapted to accommodate a roller tip member (not shown), such as for distributing restorative material, as is disclosed in U.S. Patent Application No. 10/736,262 to Besek et al. entitled "Instrument for distributing restorative material on a tooth surface," which is expressly incorporated by reference herein in its entirety. The roller tip member may be rotatably mounted on the end 34, 130 of the tip portion 24, 118 so as to rotate about an axis (not shown) of the end 34, 130 of the instrument 10, 100. The roller tip member may be sized to distribute the restorative material on a tooth surface, including a cavity surface. The roller tip may be removable from the end 34, 130, such that differently shaped tips may be placed thereon, for example, during the restoration of a tooth, as necessary, to ensure complete and even coverage to an uneven surface.

Accordingly, there is provided an improved dental instrument 10, 100 with movable tip portion 24, 118 and tip member 38, 134 adapted for intra oral use with the mobility and stability needed, for example, to access difficult to reach areas in the mouth during dental procedures and that reduces the number of parts and labor and costly materials required for assembly thereof, thereby reducing overall costs.

While the invention has been illustrated by a description of various embodiments and while these embodiments have been described in considerable detail, additional advantages and modifications will readily appear to those skilled in the art.

## Claims

1. A dental instrument, comprising a handle portion having an axial length and a distal end, the distal end comprising an aperture extending therethrough and defining an axis, a stop positioned substantially proximate the aperture, and a tip portion having one end defining a gear provided with teeth for cooperating with the stop and an opposing end defining a tip for intra oral use, the gear further including a flange extending away therefrom, the flange adapted to be removably and rotatably secured within the aperture so that the tip rotates about the axis and the teeth cooperate with the stop to fixedly position the tip thereabout.

2. A dental instrument, comprising a handle portion having an axial length and a distal end, the distal end comprising a flange extending away therefrom and defining an axis, a stop positioned substantially proximate the flange, and a tip portion having one end defining a gear provided with teeth for cooperating with the stop and an opposing end defining a tip for intra oral use, the gear further including an aperture extending therethrough, the flange adapted to be removably secured within the aperture so that the tip rotates about the axis and the teeth cooperate with the stop to fixedly position the tip thereabout.

3. The dental instrument of either claim 1 or claim 2 wherein the flange further includes a notched section defined by a gap therein to permit insertion within and removal from the aperture.

4. The dental instrument of any preceding claim wherein the stop includes an elastic material.

5. The dental instrument of any preceding claim wherein the tip rotates up to about 300° about the axis.

6. The dental instrument of any preceding claim wherein the stop extends substantially parallel to the axial length of the handle portion.

7. The dental instrument of any one of claims 1 to 5 wherein the stop extends substantially perpendicular to the axial length of the handle portion.

8. The dental instrument of any preceding claim wherein the axis is substantially parallel to the axial length of the handle.

9. A dental instrument, comprising a handle portion having an axial length and a distal end including an aperture extending therethrough and defining an axis, a plurality of first stop members disposed about the aperture, and a tip portion having one end defining a boss portion with at least one second stop member associated therewith for cooperating with the first stop members and an opposing end defining a tip for intra oral use, the boss portion being rotatably secured within the aperture so that the tip rotates about the axis and the at least one second stop member cooperates with the first stop members to fixedly position the tip thereabout.

10. The dental instrument of claim 9 wherein the boss portion further includes a radial protrusion extending away therefrom, the protrusion including the at least one second stop member for cooperating with the first stop members.

11. The dental instrument of claim 10 wherein the protrusion includes an elastic material.

12. The dental instrument of any one of claims 9 to 11 wherein the at least one second stop member includes two second stop members for cooperating with the first stop members to fixedly position the tip about the axis.

13. The dental instrument of any one of claims 9 to 12 wherein the tip rotates up to about 180° about the axis.

14. The dental instrument of any one of claims 9 to 13 wherein the tip portion is overmolded on the distal end of the handle portion such that the boss portion is non-removably and rotatably secured within the aperture.

15. The dental instrument of any one of claims 1 to 7 or 9 to 14 wherein the axis is substantially perpendicular to the axial length of the handle.

16. The dental instrument of any preceding claim wherein the tip includes a tip member adapted for intra oral use.

17. The dental instrument of claim 16 wherein the tip member comprises one of a spongy, porous plastic, adhesive, or paper material, or combination thereof.

18. The dental instrument of either claim 16 or claim 17 wherein the tip member is removable.

19. The dental instrument of any preceding claim wherein the handle portion includes gripping means.
